Europäisches Patentamt

European Patent Office

Office européen des brevets

(11) Publication number: **0 175 134
B1**

# EUROPEAN PATENT SPECIFICATION

(45) Date of publication of patent specification: **25.04.90**

(51) Int. Cl.⁵: **C 08 L 83/04**

(21) Application number: **85110039.6**

(22) Date of filing: **09.08.85**

(54) Polysiloxane composition.

(30) Priority: **07.09.84 NL 8402732**

(43) Date of publication of application:
**26.03.86 Bulletin 86/13**

(45) Publication of the grant of the patent:
**25.04.90 Bulletin 90/17**

(84) Designated Contracting States:
**BE DE FR GB NL**

(56) References cited:
**BE-A- 881 499
DE-A-1 959 842
US-A-4 115 356
US-A-4 438 039**

(73) Proprietor: **GENERAL ELECTRIC COMPANY
1 River Road
Schenectady New York 12305 (US)**

(72) Inventor: **Van Dijk, Frits Albert
Prinses Margrietlaan 24
NL-4645 HL Putte (NL)**

(74) Representative: **Sieb, Rolf, Dr. et al
General Electric - Deutschland Patentabteilung
Praunheimer Landstrasse 50
D-6000 Frankfurt/Main (DE)**

Courier Press, Leamington Spa, England.

**Description**

The present invention relates to a composition comprising:

a) a polysiloxane;

b) an alkoxysilane compound as a cross-linking agent;

c) a titanium chelate catalyst;

d) an epoxytrialkoxysilane for improving the bonding of said composition; and

e) a filler

Such a mixture is disclosed in US—A—4,100,129 in which the agent for improving the bonding is an isocyanurate compound. Said US—A—4,100,129 is notably directed to the use of a specific catalyst for the cross-linking agent and to the quantities in which said materials are used, so that a cured composition having improved properties is obtained.

It is stated in US—A—4,438,039 that a disadvantage of the cured mixture as described in US—A—4,100,129 is the formation in the long run of nodules, which is associated with the catalyst used. According to US—A—4,438,039 the formation of nodules can be avoided by using a mixed catalyst. The mixture according to US—A—4,438,039 may comprise the same agent improving the bonding as described in US—A—4,100,129.

DE—A—1 959 842 discloses a vulcanizable organopolysiloxane composition comprising a hydroxy terminated organopolysiloxane, a metal organic catalyst and a vulcanizing agent. Said catalyst can be a titanium salt, particularly a carboxylic acid salt, but only tin salts have actually been used in the examples. Said vulcanizing agent can be an oxirane, cyano or carboxy substituted alkoxysilane, optionally in admixture with another alkoxysilane and a filler. The purpose of the composition of DE—A—1 959 842 is to provide organopolysiloxanes having improved physical properties.

The composition of BE—A—881 499 apparently is to provide the contrary of an improved adhesion, for according to page 5, paragraph 2, component (b), the α,ω-dihydroxydiorganopolysiloxane is to increase the anti-adhesive properties and even does so when, as in example 3, γ-glycidoxypropyltrimethoxysilane is used (compare page 13, lines 13 to 15 of BE—A—881 499.

It has now been found possible to improve the properties of the said known mixtures based on a titanium complex catalyst by using a different agent for improving bonding. The bonding to a substrate of concrete, aluminum, stainless steel and polyacrylate can be improved by using a different agent improving the bonding. The mixture according to the present invention comprises an epoxytrialkoxysilane compound as the agent improving the bonding, and a titanium complex as the catalyst γ-Glycidyloxypropyl trimethoxy silane is preferably used.

The use of an epoxytrialkoxysilane compound in polysiloxane-containing mixtures is known per se from US—A—4,115,356. According to US—A—4,115,356 a mixture is prepared based on a polydiorganosiloxane, an alkyltriacetoxy silane compound and, optionally, a tin-containing catalyst. In order to improve the bonding to a substrate of aluminum or glass, an epoxytrialkoxysilane, preferably γ-glycidoxypropyl-trimethoxysilane, is added to the known mixture. As a result of this addition, good bonding to glass in particular is obtained. Slightly less good bonding is obtained on an aluminum substrate. It is therefore surprising that, when an epoxytrialkoxysilane is used in a mixture with an alkoxysilane compound and a titanium complex as the catalyst, good bonding to various substrates, for example, aluminum and glass, is obtained and no nodules are formed.

The mixture according to the invention comprises a titanium complex as the catalyst. The catalyst is usually used in a quantity of from 0.1 to 10 parts by weight per 100 parts by weight of polysiloxane. All the titanium complexes known per se for polysiloxane mixtures which can be cured at room temperature are suitable. In this connection reference may be made to US—A—4,100,129; 4,438,039; 3,856,839; 3,334,067; and 3,845,161. A titanium chelate as described in US—A—4,438,039 or 4,100,129, in particular a titanium chelate as described in Example 1 of each of these Patent Specifications, is preferably used.

The mixture according to the invention also comprises a polysiloxane. Suitable polysiloxane compounds are polydiorganosiloxane compounds, the chain of which is terminated by a silanol. The organo groups in these compounds generally are monovalent hydrocarbon radicals, for example, alkyl radicals having 1—8 carbon atoms, cycloalkyl radicals, for example, cyclohexyl, alkenyl radicals, for example, alkyl, mononuclear aryl radicals, for example, phenyl, fluoroalkenyl radicals, for example 3,3,3-trifluoropropyl. The polymer may comprise up to 10% of trifunctional units. The viscosity usually is from 100 to 1,000,000 mPas, Preferably 100 to 100,000 mPas at 25°C.

The mixture according to the invention also comprises an alkoxysilane compound as a cross-linking agent. 0.01 to 30 parts by weight of cross-linking agent are usually employed per 100 parts by weight of polysiloxane. As examples of suitable alkoxysilane compounds may be mentioned: $CH_3Si(OCH_3)_3$; $CH_3Si(OCH_2CH_3)_3$; $(CH_3)_2Si(OCH_3)_2$; $CH_3(CH_2)_6Si(OCH_3)_3$; $CF_3CH_2Si(OCH_3)_3$; $NCCH_2CH_2Si(OCH_3)_3$.

The mixture according to the present invention further comprises a filler and may further comprise other suitable additives. Preferably, the filler is calcium carbonate, fumed silica or a mixture of these fillers.

The invention will be described in greater detail with reference to the following specific examples and the comparative example.

# EP 0 175 134 B1

### Example I and comparative example

The compositions of the mixtures prepared according to example I and the comparative example are recorded in Table A.

### TABLE A

| Composition (parts by weight) | Comparative Example | Example I |
|---|---|---|
| polydimethylsiloxane (terminal silanol groups) (viscosity approx. 100,000 mPas) | 34,5 | 34,5 |
| polydimethylsiloxane (terminal CH₃) (viscosity approx. 100 mPas) | 15,5 | 15,5 |
| calcium carbonate | 39,5 | 39,5 |
| titanium dioxide | 2,5 | 2,5 |
| fumed silicon oxide | 4,0 | 4,0 |
| methyl trimethoxysilane | 1,4 | 1,4 |
| titanium chelate (catalyst according to U.S.—A—4,438,039, example I) | 1,8 | 2,0 |
| tris[3-(trimethoxysilyl) propyl]-isocyanurate | 0,8 | — |
| gamma-glycidyloxypropyl-trimethoxysilane | — | 0,6 |

The methyltrimethoxysilane mentioned in Table A has been used as a cross-linking agent.

The isocyanurate is the agent improving the bonding as used in the comparative example, and gammaglycidyloxypropyltrimethoxysilane is the agent used to improve bonding according to the present invention.

Bonding of the mixture according to the comparative example and according to example I on various substrates was determined by means of a manual peel test.

The results are recorded in Table B. From the data of Table B better bonding appears in the mixture according to the present invention than the mixture according to the comparative example. It is particularly striking that the bonding to metals, for example, aluminum, stainless steel, brass, is as good as the bonding to glass.

The composition according to Example I was stored at 23°C for 10 months. Nodule formation did not occur.

### TABLE B

Bonding effect (manual peel test) of the mixtures on a substrate (*1 and *2)

| Substrate | For comparison | Example I |
|---|---|---|
| Aluminium | 5—6—2 | 1—1—1 |
| Stainless steel | 3—6—1 | 1—1—1 |
| Copper | 1—1—5 | 1—1—1 |
| Brass | 1—3—6 | 1—1—1 |
| Glass | 1—1—1 | 1—1—1 |
| Tile | 1—1—1 | 1—1—1 |

3

TABLE B (continued)

Bonding effect (manual peel test) of the mixtures on a substrate (*1 and *2)

| | | |
|---|---|---|
| Concrete | 5—6—6 | 1—6—6 |
| Marble | 1—6—3 | 1—3—1 |
| Wood (painted) | 1—1—4 | 1—1—1 |
| Polycarbonate | 1—1—1 | 1—1—1 |
| Polyacrylonitrile (moulded) | 1—1—2 | 1—1—1 |
| Polyvinylchloride (rigid) | 1—1—3 | 1—1—1 |

Remark: *1) The first value relates to the value obtained after two weeks, the second value relates to the value obtained after three weeks immersion in water at ambient temperature and the third value relates to the value obtained after heating at 70°C for three days.

*2) "1" is excellent (the bond is stronger than the composition itself), and "6" is very bad (the composition detaches from the substrate).

Claims

1. A curable composition, consisting of:
a. a polysiloxane;
b. an alkoxysilane cross-linking agent;
c. a titanium chelate catalyst;
d. an epoxytrialkoxysilane for improving the bonding of said composition; and
e. a filler.
2. A composition as set forth in Claim 1, wherein the epoxytrialkoxysilane is gammaglycidyloxypropyltrimethoxysilane.

Patentansprüche

1. Härtbare Zusammensetzung bestehend aus:
a. einem Polysiloxan;
b. einem Alkoxysilan-Vernetzungsmittel;
c. einem Titanchelat-Katalysator;
d. einem Epoxytrialkoxysilan zum Verbessern der Bindung der Zusammensetzung und
e. einem Füllstoff.
2. Zusammensetzung nach Anspruch 1, bei der das Epoxytrialkoxysilan γ-Epoxytrialkoxysilan-trimethoxysilan ist.

Revendications

1. Composition durcissable, se composant de:
a. un polysiloxane;
b. un alcoxysilane comme agent de réticulation;
c. un chélate de titane comme catalyseur;
d. un époxytrialcoxysilane pour améliorer la liaison de cette composition; et
e. une charge.
2. Composition selon la revendication 1, dans laquelle l'époxytrialcoxysilane est le gammaglycidyloxy-propyltriméthoxysilane.